(19) Europäisches Patentamt

European Patent Office

Office européen des brevets

(11) **EP 0 646 309 B1**

(12) **FASCICULE DE BREVET EUROPEEN**

(45) Date de publication et mention
de la délivrance du brevet:
**23.08.2000 Bulletin 2000/34**

(51) Int. Cl.⁷: **A01B 63/111**

(21) Numéro de dépôt: **94402189.8**

(22) Date de dépôt: **30.09.1994**

(54) **Procédé et dispositif de limitation du patinage d'un tracteur agricole**

Verfahren und Vorrichtung zum Begrenzen des Schlupfes eines landwirtschaftlichen Schleppers

Method and device for limiting the wheel slip of an agricultural tractor

(84) Etats contractants désignés:
**BE DE ES GB IT**

(30) Priorité: **05.10.1993 FR 9311832**

(43) Date de publication de la demande:
**05.04.1995 Bulletin 1995/14**

(73) Titulaire: **RENAULT-AGRICULTURE**
**78141 Velizy Villacoublay Cédex (FR)**

(72) Inventeurs:
• **Bauzon, Jacques**
**F-92190 Chatenay Malabry (FR)**

• **Gorseth, Stève**
**Fargo, North Dakota 58103 (US)**

(74) Mandataire:
**Ernst-Schonberg, Michel et al**
**RENAULT,**
**Service 02 67,**
**860, Quai de Stalingrad**
**92109 Boulogne-Billancourt (FR)**

(56) Documents cités:
**EP-A- 0 280 376          DE-A- 3 513 064**

## Description

La présente invention concerne un procédé et un dispositif destiné à limiter le patinage des roues motrices d'un tracteur agricole, lorsqu'il exerce un effort de traction sur un outil de travail du sol. Elle est applicable à un tracteur équipé d'un outil de travail du sol, porté ou semi-porté.

Le glissement d'un tracteur, qui correspond à une perte de puissance du tracteur par perte de vitesse d'avancement, s'exprime habituellement par la relation

$$g \% = \frac{D-d}{D} \times 100,$$

dans laquelle D est la distance qui serait parcourue par le tracteur à vide, évaluée à l'aide d'un capteur de sortie de transmission, ou de capteurs de vitesse de roues motrices, et d est la distance effectivement parcourue, mesurée par exemple à l'aide d'un radar.

Les systèmes de contrôle de glissement utilisés actuellement tendent à maintenir le glissement du tracteur à un niveau préétabli, en asservissant le relevage du tracteur à la valeur du taux de glissement. Par la publication FR 2 649 810, on connaît un dispositif de régulation de patinage qui agit sur la profondeur d'un outil poussé, monté à l'avant du tracteur. La régulation proposée repose sur le calcul d'une valeur de patinage admise (Ta) et d'un écart toléré du taux de patinage (dTa). Si le patinage instantané est supérieur à la somme Ta + dTa, le dispositif déclenche la remontée de l'outil, tandis que si le patinage instantané est inférieur à Ta - dTa, il ordonne sa descente. Un tel système de contrôle présente l'inconvénient de reposer sur l'observation de deux paramètres distincts, Ta et dTa. Par ailleurs, il impose la descente de l'outil pour rétablir la valeur de patinage admise Ta, lorsque le patinage instantané est trop faible. Cette disposition, ayant pour effet d'augmenter le patinage dans certaines circonstances, alors que l'optimisation des conditions de traction suppose toujours la réduction de celui-ci, est préjudiciable à la qualité et au rendement du travail du sol.

La publication FR 2 533 409 décrit un autre système de contrôle assurant simultanément la régulation de la profondeur de travail d'une charrue et, la régulation du patinage du tracteur associé à celle-ci. La régulation de la profondeur de travail du sol est assurée, d'une part à partir du contrôle en position du vérin de relevage associé à l'avant de l'outil, et d'autre part à partir du contrôle en position de l'arrière de l'outil, à l'aide d'une roue de jauge équipée d'un vérin hydraulique et d'un capteur position. La régulation du patinage est effectuée sur la base de signaux fournis par un capteur de vitesse et de la positon de la roue de jauge. Elle consiste à comparer le patinage observé à une consigne prédéterminée, à commander les actionneurs associés à l'avant et à l'arrière de l'outil, de façon à soulever ce dernier lorsque le patinage instantané dépasse la consigne et à l'enfoncer dans le cas contraire. Le système de contrôle décrit dans cette publication, présente l'inconvénient d'imposer une profondeur de travail du sol différente de celle qui est souhaitée par le conducteur du tracteur, dès lors que la consigne de patinage préétablie impose à la charrue une profondeur de travail du sol inférieure à celle-ci.

DE-A-3513064 décrit un système de contrôle, sans réglage de seuil de glissement toléré par l'utilisateur, ni prise en compte particulière de la phase de descente de l'outil jusque à sa position de travail.

La présente invention a pour but d'obtenir une limitation du glissement des roues motrices d'un tracteur agricole, qui s'adapte automatiquement à la profondeur de travail et à la vitesse de déplacement souhaitées par l'utilisateur, sans interférence avec les consignes de contrôle de l'effort et de contrôle en position imposées par celui-ci.

Ce problème est résolu par un procédé de limitation du glissement des roues motrices d'un tracteur agricole équipé d'un outil de travail du sol, selon la revendication 1.

Selon un mode de réalisation de l'invention, si Eg ≤ Sr, la consigne de position corrigée Pc est identique à la consigne de position P établie pour les bras de relevage, par l'utilisateur.

Selon un mode de réalisation de l'invention, si Eg > Sr, l'écart $\varepsilon g$ = Eg - Sr est traité par un correcteur, de façon à établir un signal de correction Cg non nul, tel que Pc = P + Cg.

Selon un mode de réalisation de l'invention, le glissement instantané GF est comparé à un seuil absolu de patinage Sa, de sorte que, tant que l'outil n'a pas rallié sa position de travail, si GF > Sa, la consigne de position corrigée Pc est égale à la somme de la consigne de position P de l'outil, et d'une correction Cg.

Selon un mode de réalisation de l'invention, le glissement instantané GF est déterminé à partir des mesures de la vitesse de rotation Vm des roues motrices et de la vitesse de déplacement Vr du tracteur, par une unité de calcul.

Selon un mode de réalisation de l'invention, la valeur de glissement calculée G est filtrée.

Selon un mode de réalisation de l'invention, la consigne de position P des bras de relevage est assurée par un système de régulation en effort et/ou en position.

Selon un mode de réalisation de l'invention, le dispositif de limitation du glissement comporte un premier soustracteur assurant la comparaison du glissement instantané GF au seuil de patinage absolu Sa, un second soustracteur effectuant la différence entre la valeur instantanée du glissement GF et la valeur moyenne GM et un troisième soustracteur effectuant la différence $\varepsilon g$ entre l'écart de glissement GF - GM et un seuil de patinage relatif Sr.

Selon un mode de réalisation de l'invention, le correcteur établit le signal de correction Cg en opérant un traitement proportionnel intégral et dérivé, sur la différence εg ou sur l'écart GF- Sa.

Selon un mode de réalisation de l'invention, l'outil de travail du sol est un outil porté.

Selon un mode de réalisation de l'invention, l'outil de travail du sol est un outil semi-porté.

La présente invention sera mieux comprise à la lecture de la description suivante d'un mode de réalisation particulier de celle-ci, en liaison avec les dessins annexés, sur lesquels :

- la figure 1 représente un tracteur agricole équipé du dispositif de l'invention.

- la figure 2 décrit le circuit de commande de ce dispositif.

- la figure 3 résume le procédé proposé par l'invention,

- la figure 4 reproduit une courbe de patinage d'un tracteur agricole entraînant un outil de travail du sol à profondeur constante sans limitation du glissement, et

- la figure 5 correspond à la figure 4 avec limitation du glissement.

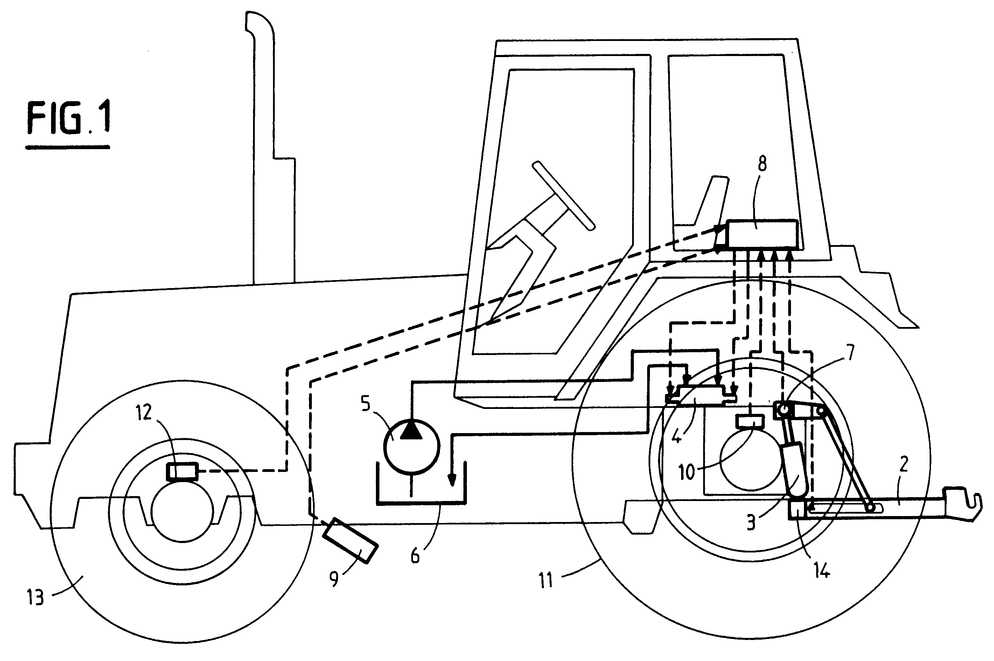

Le tracteur agricole représenté sur la figure 1 comporte deux bras de relevage arrière 2 actionnés par des vérins 3, sous la commande d'au moins une valve proportionnelle électro-hydraulique, ou électrovalve 4. Les électrovalves 4 sont alimentées par une pompe hydraulique 5, qui est entraînée par la rotation du moteur du tracteur (non représenté). L'huile est refoulée par la pompe 5 à partir du réservoir 6 en direction des électrovalves 4, tandis que le retour au réservoir 6 permet de vidanger les vérins 3. La position des bras de relevage 2, est repérée à l'aide de capteurs de position 7, reliés à une unité de calcul 8. Leur manoeuvre est effectuée grâce à l'activation des électrovannes 4 par l'unité de calcul 8. Le patinage des roues motrices 11 du tracteur est évalué à l'aide d'un capteur de vitesse de déplacement 9 du tracteur 1, tel qu'un radar ou un cinémomètre 9, à l'aide d'un capteur de vitesse de rotation 10 des roues motrices 11, et de l'unité de calcul 8. Si le tracteur n'a que deux roues motrices, le radar 9 peut avantageusement être remplacé par un capteur de vitesse 12 des roues avant non motrices 13. Enfin, l'effort de traction exercé par le tracteur 1 sur un outil porté, semi-porté, ou tiré, peut être déterminé par des capteurs d'effort 14 disposés par exemple au niveau des bras de relevage 2, ou par tout autre équipement approprié.

L'exemple de réalisation de l'invention illustré par la figure 1 se rapporte à la limitation du patinage d'un tracteur agricole équipé d'un outil porté. L'unité de calcul 8 apparaissant sur le schéma détermine les consignes de correction de position appliquées dans ce cas aux bras de relevage 2 pour commander en priorité une limitation de patinage, adaptée à la profondeur de travail et à la vitesse de déplacement souhaitées par ailleurs par l'utilisateur. Si l'outil est semi-porté, ces consignes pourront également être transmises à un organe de support secondaire de l'outil, tel qu'une roue de jauge. Dans tous les cas la limitation du glissement obtenue conformément à l'invention est calculée sur la base des vitesses Vm et Vr déterminées respectivement par le capteur de vitesse 10 des roues motrices 11 et par le capteur de vitesses de déplacement du tracteur 9 ou 12. Cette limitation est mise en oeuvre en imposant à l'outil une consigne de position corrigée Pc, mais son calcul s'effectue indépendamment des consignes de profondeur de travail et de limitation d'effort, pouvant être imposées par ailleurs au tracteur par les systèmes de régulation correspondants.

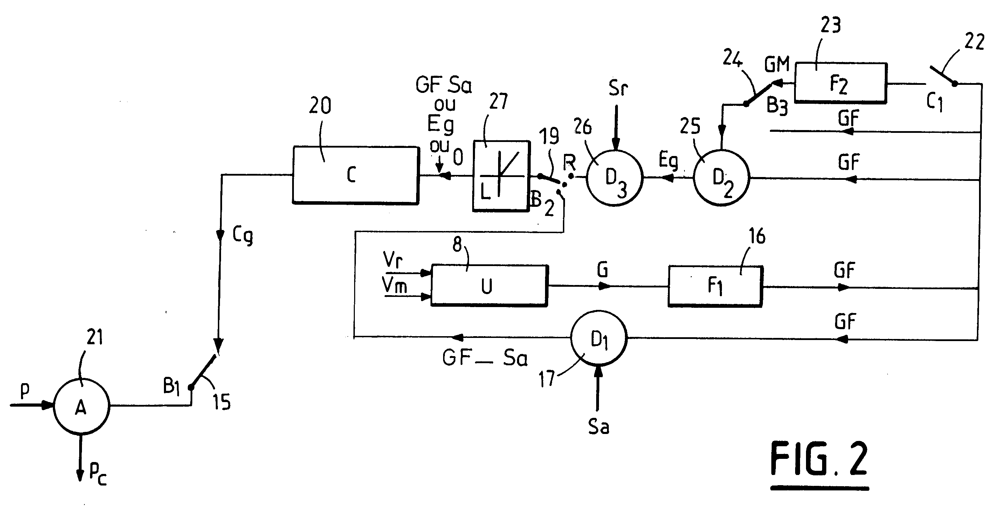

L'utilisateur dispose à son poste de conduite d'un interrupteur (B$_1$) 15 responsable de la mise en route du dispositif, apparaissant dans le circuit de commande faisant l'objet de la figure 2. Dans ce circuit, on retrouve l'unité de calcul 8, mentionnée sur la figure 1, qui assure le calcul du glissement instantané G, à partir de Vm et Vr. G est calculé en application de la formule

$$G = \frac{RV_m - RV_r}{RV_m}$$

où R représente le rayon sous charge de la roue motrice 11. Si le tracteur 1 est muni d'un réseau de communication établi pour véhiculer d'autres signaux à destination du conducteur ou des divers automatismes embarqués, tels que les systèmes de régulation de position et d'efforts mentionnés précédemment, les informations Vm et Vr pourront avantageusement être regroupées dans l'unité de calcul 8 en empruntant ce réseau.

Le signal représentatif du glissement G est ensuite filtré par un premier circuit de filtration (F$_1$) 16, du type filtre passe-bas, pour éliminer les fréquences qui dépasseraient la bande passante des automatismes embarqués. Un premier soustracteur (D$_1$) 17 assure la comparaison du signal de sortie du filtre GF avec une valeur de référence Sa, ou valeur de patinage absolu, de l'ordre de 50 %, afin de détecter la présence d'un patinage anormalement important, par exemple lorsque le tracteur traverse une mouillère.

Le résultat de cette comparaison est transmis à un inverseur (B$_2$) 19, qui reste en position de travail (T), tant que l'outil n'a pas atteint sa position de travail. Dans les autres cas, il est en position de repos (R) et transmet un signal εg.

Lorsque l'inverseur (B$_2$) 19 est activé, et que GF > SA, les bras de relevage 2 reçoivent, par l'intermédiaire de l'additionneur (A) 21, une consigne de relevage corrigée P + Pc, dont la correction Cg est calculée par le correcteur (C) 20, sur la base du signal GF - Sa, par traitement proportionnel, intégral et dérivé.

En revanche, lorsque l'inverseur $(B_2)$ 19 est en position de repos (R), la consigne de position corrigée Pc résulte de la sommation, dans l'additionneur (A) 21, de la consigne de position P et de la consigne de limitation de glissement Cg, élaborée dans le circuit de commande de la façon suivante. Lorsque l'outil a rejoint une position corrigée Pc, le contacteur $(C_1)$ 22 se ferme, de façon à permettre au second filtre $(F_2)$ 23 de calculer la valeur moyenne du patinage GM sur une période de référence, tandis qu'un troisième inverseur $(B_3)$ 24 coupe la sortie du filtre $(F_2)$ 23 et que le second soustracteur $(D_2)$ 25, recevant deux signaux d'entrée identiques GF émet un signal de sortie nul. A l'issue de cette période de calcul, le contacteur $(C_1)$ 22 s'ouvre, et le troisième inverseur $(B_3)$ 24 bascule. Le second soustracteur $(D_2)$ 25 calcule alors la différence Eg = GF - GM et transmet le signal Eg à un troisième soustracteur $(D_3)$ 26, effectuant la comparaison entre l'écart Eg et un seuil de patinage toléré Sr, par exemple de l'ordre de 4 %. Si Eg <, Sr le circuit (L) 27 transmet un signal de valeur nulle au correcteur 20. Si Eg > Sr, la valeur $\varepsilon g$ = Eg - Sr est transmise au correcteur 20 du type "P.I.D", qui réalise une action proportionnelle intégrale et dérivée sur les valeurs $\varepsilon g$. A titre indicatif, son signal de sortie, ou consigne de limitation de patinage Cg, pourra être de la forme :

$$Cg = Kp \left[ 1 + \frac{1}{T_i} \int_{t_o}^{t_1} dt + Td \frac{d}{dt} \right] \varepsilon g$$

où

Kp est une constante,
Ti est un terme d'intégration
Td est un terme de différenciation
to et $t_1$ sont les dates d'intégration.

Comme indiqué précédemment, l'additionneur (A) 21 élabore alors la consigne de position corrigée Pc, à partir de la consigne de limitation de glissement calculée Cg et de la consigne de position P des bras de relevage 2. Bien entendu, l'ensemble des calculs effectués par le dispositif de limitation de glissement de l'invention est déterminé par le mode de fonctionnement du relevage du tracteur. L'application de la correction calculée est assujettie à la commande du premier inverseur $(B_1)$ 15 par l'utilisateur, à partir de son poste de conduite. Par ailleurs, le seuil de patinage relatif Sr est réglable par l'utilisateur. Enfin la sortie du filtre $(F_1)$ 16 peut être visualisée sur un afficheur, placé par exemple sur une face de boîtier électronique renfermant le dispositif, afin de permettre à l'utilisateur d'apprécier l'efficacité de celui-ci, en comparant la valeur de patinage observée avec ou sans limitation.

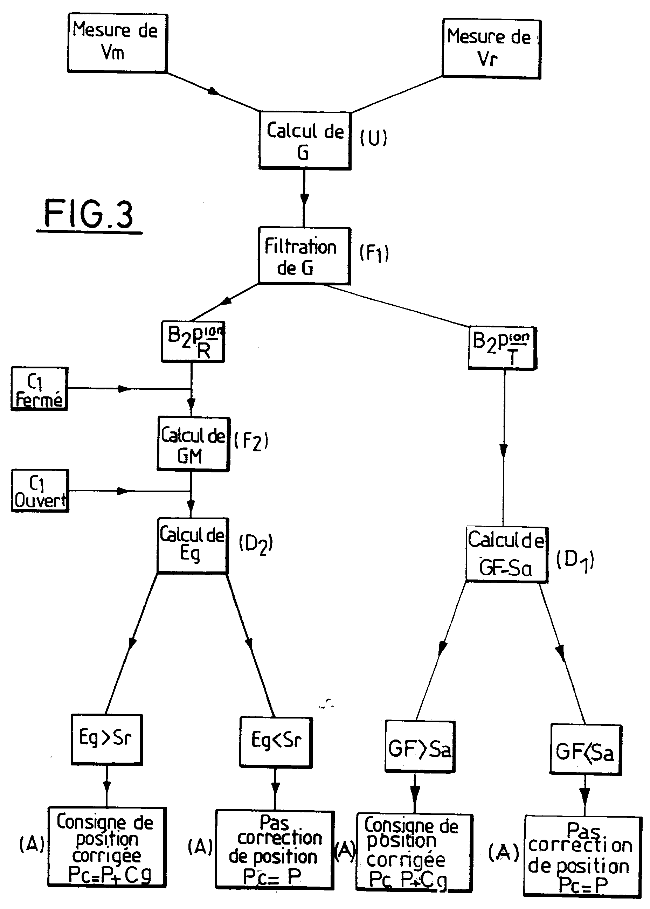

L'organigramme de la figure 3, met en évidence que le procédé de l'invention repose sur la mesure de la vitesse Vm des roues motrices 11, sur la mesure de la vitesse de déplacement Vr du tracteur 1, et sur le calcul du patinage instantané G dans l'unité de calcul 8. La valeur de patinage instantané G est comparée, après filtration dans le premier filtre $F_1$, au seuil de patinage absolu Sa (premier soustracteur $D_1$). Tant que $B_2$ est en position (T), c'est-à-dire tant que l'outil n'a pas rejoint sa position de travail P, si GF > Sa, l'outil reçoit une consigne de relevage corrigée Pc = P + Cg , Cg étant un signal de sortie élaboré par le correcteur 20 sur la base de l'écart entre le patinage GF et le seuil de patinage absolu Sa, de façon à modifier la consigne de position P établie par le système de commande du relevage.

Par ailleurs, lorsque $B_2$ est passé en position (R), c'est à dire lorsque l'outil a atteint sa position de travail P, la valeur moyenne du patinage GM, calculée sur une période de référence ($C_1$ fermé) est comparée par le second soustracteur soustracteur $D_2$ à la valeur comparée par le second soustracteur soustracteur $D_2$ à la valeur instantanée GF ($C_1$ ouvert). L'écart Eg = GF - GM est lui-même comparé au seuil du patinage relatif Sr dans le troisième soustracteur $D_3$. Si EG < Sr, les bras de relevage ne reçoivent aucune consigne particulière du dispositif de limitation de glissement. En revanche si Eg > Sr, le correcteur 27 élabore sur la base de $\varepsilon g$ un signal de sortie Cg permettant à l'additionneur 21 d'imposer aux bras de relevage 2 une consigne de position corrigée Pc = P + Cg , tenant compte de la valeur moyenne du patinage moyen subi par le tracteur en l'absence de limitation.

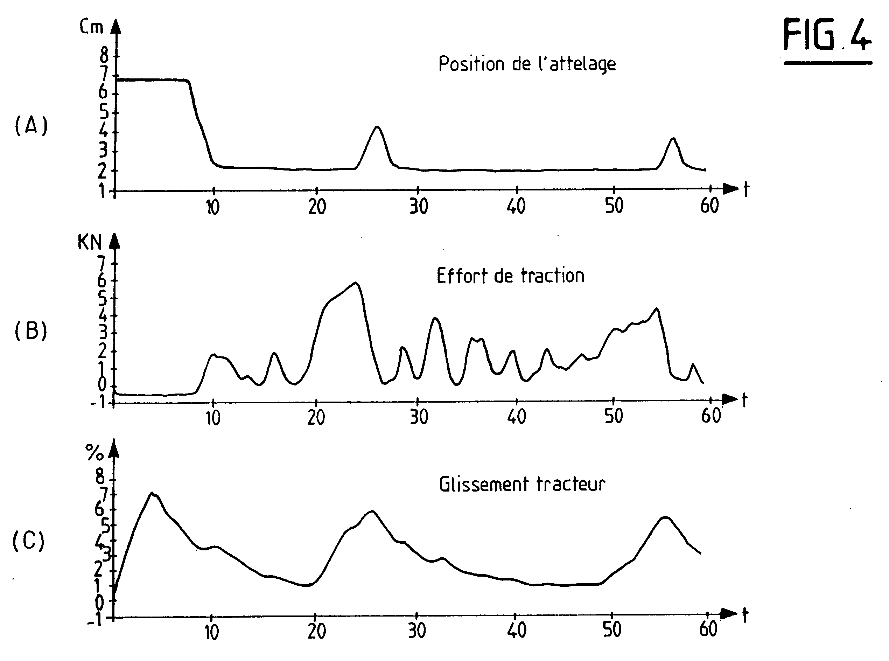

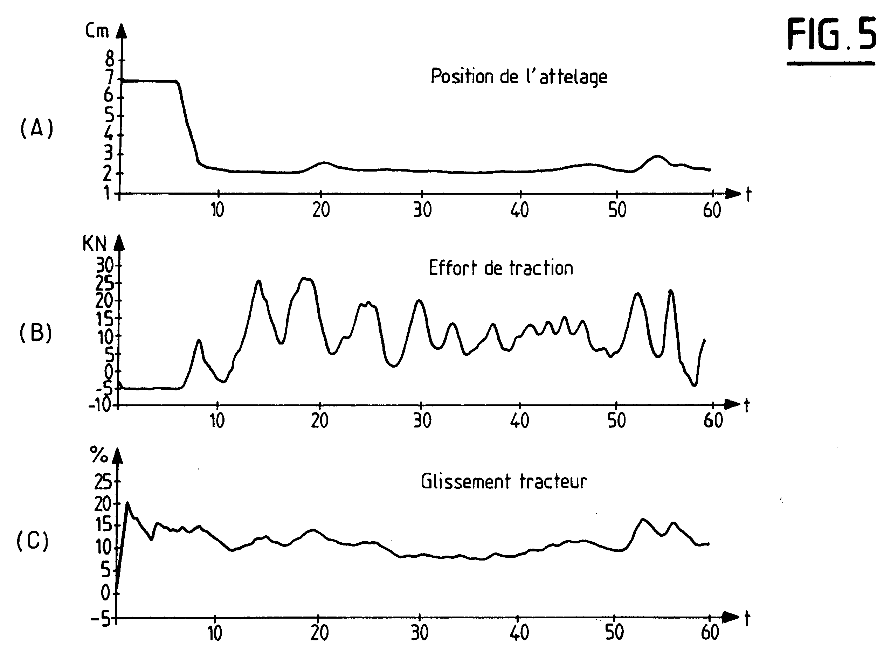

Les figures 4 et 5 illustrent les résultats obtenus en utilisant le dispositif de limitation de glissement proposé par l'invention. Ces deux figures sont relatives à des enregistrements effectués lors d'un labour effectué avec un outil du type "Canadien". Sur chacune d'elles, la courbe (A) représente la position de l'attelage P au cours du temps, mesurée en centimètres par rapport à une position de référence P = 0, et les courbes B et C reproduisent respectivement l'évolution correspondante de l'effort de traction en kilonewtons, et du glissement en pourcentage. Au cours des essais illustrés par ces figures, le relevage du tracteur est contrôlé en position, c'est-à-dire que l'effort de traction n'est pas régulé et que le système de commande du relevage maintient les bras dans une position de consigne déterminée par l'utilisateur. A l'instant t = 0, le tracteur est à l'arrêt, et ses bras de relevage sont en position haute. Le conducteur commande ensuite une descente à l'instant t = 8s . Pendant l'enregistrement des efforts de traction temporaires très importants aux instants t = 23 s et t = 54 s , ont engendré un fort patinage, de l'ordre de 60 % lors de l'essai illustré par la figure 4. Le patinage n'a pu être réduit que par une manoeuvre du conducteur. Ce dernier a diminué la consigne de profondeur de travail pour soulager le tracteur de sa charge.

On remarquera le retard introduit par le conducteur pour la correction manuelle de ce patinage : la correction intervient alors résultant est de 36 %. Avant la descente de l'outil, un patinage apparent, très important, est dû au fait que la mesure de la vitesse du tracteur est faite par un radar doppler dont le fonctionnement est imparfait. En effet, celui-ci ne peut mesurer des vitesses de déplacement inférieures à 0,5 Km/h et, dans ce cas, indique une valeur nulle. Ceci introduit un glissement fictif de 100 % dès lors que la vitesse mesurée du tracteur est nulle. Ce patinage apparent n'est pas pris en compte par le limiteur de patinage.

L'enregistrement de la figure 5 a été fait dans les mêmes conditions de vitesse et de profondeur, sur une raie de labour adjacente à celle de la figure 4 . L'outil utilisé est le même. Le limiteur de patinage est mis en route avant le départ. On peut observer des réactions du relevage aux instants t = 21 s et t = 50 s qui correspondent aux zones de terrain difficiles à franchir. Le limiteur a commencé à corriger la position quand le patinage avait atteint la valeur de 15 % approximativement. Le patinage moyen mesuré est de 14 %. L'outil électronique a autorisé une mesure plus sensible que l'homme du patinage et donc une correction anticipée. La fonction installée, en plus de limiter le patinage à une valeur tolérable, a contribué d'autre part à limiter l'effort de traction global subit par le tracteur. La profondeur de travail moyenne a été maintenue ce qui correspond au besoin prioritaire de l'utilisateur.

En conclusion, il faut souligner que le procédé et le dispositif de limitation adaptative du glissement faisant l'objet de l'invention est mis en route lorsque l'outil a atteint sa position de travail ($B_2$) en position (R)), et qu'un effort de traction générateur de patinage est exercé par le tracteur. La limitation n'intervient donc pas dans les phases de travail qui ne regroupent pas ces conditions, telles que le transport sur route et les demi-tours en bout de parcelle.

Le procédé et le dispositif proposés trouvent une application avantageuse sur un tracteur équipé par ailleurs de boucles de régulation de position et d'effort. En effet, lorsqu'un tracteur ainsi régulation de position et d'effort. En effet, lorsqu'un tracteur ainsi équipé patine, l'effort de traction tend à diminuer par décroissance de la vitesse d'avance augmentation de la résistance au roulement et perte d'efficacité des roues motrices. Les systèmes de contrôle d'effort classiques, détectant en conséquence une diminution de l'effort de traction, réagissent au patinage en commandant la descente de l'outil. Cette réaction tend à immobiliser davantage le tracteur. Dans des circonstances analogues, l'invention permet de s'opposer à la descente de l'outil en commandant automatiquement la remontée de celui-ci. Elle assure ainsi une aide au franchissement des zones de fort patinage telles que des "mouillères". L'utilisateur du tracteur est déchargé de la surveillance visuelle de ses roues motrices, rendue très incommode par les ailes de protection équipant la plupart des tracteurs actuels. Enfin, la mesure et la mémorisation du patinage moyen "naturellement" subi par le tracteur en absence de limitation, et l'exploitation de ce paramètre dans l'élaboration des consignes de correction de position imposées aux bras de relevage ou à tout autre support d'outil réglable en position, tel qu'une roue de jauge, permettent d'obtenir une limitation du glissement, adaptée à la situation momentanée du tracteur.

**Revendications**

1. Procédé de limitation du glissement g des roues motrices (11) d'un tracteur agricole (1) équipé d'un outil de travail du sol, par correction de la consigne de position P établie pour ce dernier par [utilisateur, caractérisé en ce que la consigne de position corrigée Pc de l'outil est déterminée

   - par la comparaison de la valeur instantanée GF du glissement g avec un seuil de patinage absolu Sa, tant que l'outil n'a pas rejoint sa position de travail, et
   - par la comparaison de l'écart Eg entre le glissement instantané GF et la valeur moyenne GM du glissement g sur une période de référence, avec un seuil de patinage toléré Sr, lorsque l'outil a rejoint sa position du travail.

2. Procédé de limitation de glissement selon la revendication 1, caractérisé en ce que, si Eg ≤ Sr, la consigne de position corrigée Pc est identique à la consigne de position P établie pour les bras de relevage (2), par l'utilisateur.

3. Procédé de limitation de glissement selon les revendications 1 ou 2, caractérisé en ce que, si Eg > Sr, l'écart eg = Eg - Sr  est traité par un correcteur (20), de façon à établir un signal de correction Cg non nul, tel que  Pc = P + Cg .

4. Procédé de limitation de glissement selon la revendication 1 ou 2, caractérisé en ce que tant que l'outil n'a pas rallié sa position de travail P, la consigne de position corrigée Pc est égale à la somme de sa consigne de position P et d'une correction Cg établie par le correcteur (20).

5. Procédé de limitation de glissement selon l'une des revendications précédentes, caractérisé en ce que le glissement instantané GF est déterminé à partir des mesures de la vitesse de rotation Vm des roues motrices (11) et de la vitesse de déplacement Vr du tracteur (1), par une unité de calcul (8).

**6.** Procédé de limitation de glissement selon la revendications 5, caractérisé en ce que la valeur de glissement calculée G est filtrée.

**7.** Procédé de limitation de glissement selon l'une des revendications 2 à 6 , caractérisé en ce que la consigne de position P des bras de relevage est assurée par un système de régulation en effort et/ou en position.

**8.** Procédé de limitation de glissement selon l'une des revendications 1 à 6, caractérisé en ce que l'outil de travail du sol est un outil porté par le tracteur.

**9.** Procédé de limitation de glissement selon l'une des revendications précédentes, caractérisé en ce que l'outil de travail du sol est un outil semi-porté.

**10.** Dispositif de limitation du glissement pour la mise en oeuvre d'un procédé conforme à l'une des revendications précédentes, caractérisé en ce qu'il comporte un premier soustracteur (17) assurant la comparaison du glissement instantané GF au seuil de patinage absolu Sa, un second soustracteur (25) effectuant la différence entre la valeur instantanée du glissement GF et la valeur moyenne GM et un troisième soustracteur (26) effectuant la différence $\varepsilon g$ entre l'écart de glissement GF - GM et un seuil de patinage relatif Sr.

**11.** Dispositif de limitation de glissement selon la revendication 10, caractérisé en ce qu'il comporte un correcteur (20) qui établit le signal de correction Cg en opérant un traitement proportionel intégral et dérivé sur la différence $\varepsilon g$ ou l'écart GF -Sa.

**Claims**

**1.** Method for limiting the slipping g of drive wheels (11) of an agricultural tractor (1) equipped with a ground working tool, by correction of the set value for the position P established for said tool by the user, characterised in that the corrected position set value Pc of the tool is determined

- by comparison of the value GF of slipping g at the time with an absolute wheel spinning threshold Sa, as long as the tool has not returned to its working position, and
- by comparison of the deviation Eg between the slipping GF at the time and the average value GM of slipping g over a reference period, with a tolerated wheel spinning threshold Sr , when the tool has returned to its working position.

**2.** Method for limiting slipping according to claim 1, characterised in that if Eg < Sr, the corrected position set value Cg is identical to the set value for the position P established for the lifting arms (2) by the user.

**3.** Method for limiting slipping according to claims 1 or 2, characterised in that if Eg > Sr, the deviation eg = Eg - Sr is processed with a corrector (20) such as to establish a non-zero correction signal Cg, such as Pc = P + Cg .

**4.** Method for limiting slipping according to claim 1 or 2, characterised in that as long as the tool has not returned to its working position P, the corrected position set value Pc is equal to the sum of the set value for the position P and a correction value Cg established by the corrector (20).

**5.** Method for limiting slipping according to one of the preceding claims, characterised in that the slipping at the time GF is determined from measurements of the turning speed Vm of the drive wheels (11) and of the speed of movement Vr of the tractor (1) by a calculating unit (8).

**6.** Method for limiting slipping according to claim 5, characterised in that the calculated slipping value GF is filtered.

**7.** Method for limiting slipping according to one of claims 2 to 6, characterised in that the set value for the position P of the lifting arms is provided by a control system for force and/or position.

**8.** Method for limiting slipping according to one of claims 1 to 6, characterised in that the ground working tool is a tool mounted on the tractor.

**9.** Method for limiting slipping according to one of the preceding claims, characterised in that the ground working tool is a semi-mounted tool.

**10.** Device for limiting slipping for implementing a method according to one of the preceding claims, characterised in that it includes a first subtractor (17) providing comparison of the slipping GF at the time to the absolute wheel spinning threshold Sa, a second subtractor (25) forming the difference between the value of slipping GF at the time and the average value GM, and a third subtractor (26) forming the difference $\varepsilon g$ between the deviation of slipping GF - GM and a relative wheel spinning threshold Sr.

**11.** Device for limiting slipping according to claim 10, characterised in that it includes a corrector (20) which establishes the correction signal Cg, by performing integrated and derived proportional processing on the difference $\varepsilon g$ or the deviation GF - Sa.

**Patentansprüche**

1. Verfahren zum Begrenzen des Schlupfes g der Antriebsräder (11) eines landwirtschaftlichen Schleppers (1), der mit einem Bodenbearbeitungswerkzeug versehen ist durch Korrektur des Sollwertes der Position P, die für letzteres vom Fahrer vorgegeben ist, dadurch gekennzeichnet, dass der korrigierte Sollwert der Position Pc für das Werkzeug bestimmt wird;

   - durch Vergleich des Momentanwertes GF des Schlupfes g mit einem absoluten Schlupfschwellwert Sa, so lange das Werkzeug nicht seine Arbeitsposition eingenommen hat und
   - durch Vergleich der Abweichung Eg zwischen dem momentanen Schlupf GF und dem Mittelwert GM des Schlupfes g über eine Referenzperiode mit einem zulässigen Schlupfschwellwert Sr, wenn das Werkzeug seine Arbeitsposition eingenommen hat.

2. Verfahren zum Begrenzen des Schlupfes nach Anspruch 1, dadurch gekennzeichnet, dass wenn Eg ≤ Sr ist, der korrigierte Sollwert der Position Pc identisch mit dem vom Fahrer vorgegebenen Sollwert der Position P für die Hubarme (2) ist.

3. Verfahren zum Begrenzen des Schlupfes nach Anspruch 1 oder 2, dadurch gekennzeichnet, dass wenn Eg > Sr ist, die Abweichung eg = Eg - Sr durch ein Korrekturglied (20) derart verarbeitet wird, dass ein Korrektursignal Cg erstellt wird, das nicht Null ist, beispielsweise Pc = P + Cg .

4. Verfahren zum Begrenzen des Schlupfes nach Anspruch 1 oder 2, dadurch gekennzeichnet, dass während das Werkzeug nicht in seiner Arbeitsposition P abgesenkt ist, der korrigierte Sollwert der Position Pc gleich der Summe aus dem Sollwert der Position P und einer vom Korrekturglied (20) erstellten Korrektur Cg ist.

5. Verfahren zum Begrenzen des Schlupfes nach einem der vorhergehenden Ansprüche, dadurch gekennzeichnet, dass der momentane Schlupf GF bestimmt wird ausgehend von der Rotationsgeschwindigkeit Vm der Antriebsräder (11) und der Fahrgeschwindigkeit Vr des Schleppers (1) mittels einer Recheneinheit (8).

6. Verfahren zum Begrenzen des Schlupfes nach Anspruch 5, dadurch gekennzeichnet, dass der berechnete Schlupfwert G gefiltert wird.

7. Verfahren zum Begrenzen des Schlupfes nach einem der Ansprüche 2 bis 6, dadurch gekennzeichnet, dass der Sollwert der Position P der Hub

arme durch ein Regelsystem für die Kraft und/oder die Position erstellt wird.

8. Verfahren zum Begrenzen des Schlupfes nach einem der Ansprüche 1 bis 6, dadurch gekennzeichnet, dass das Bodenbearbeitungswerkzeug ein am Schlepper angehängtes Werkzeug ist.

9. Verfahren zum Begrenzen des Schlupfes nach einem der vorhergehenden Ansprüche, dadurch gekennzeichnet, dass das Bodenbearbeitungswerkzeug ein Aufsattelwerkzeug ist.

10. Vorrichtung zum Begrenzen des Schlupfes zur Durchführung des Verfahrens nach einem der vorhergehenden Ansprüche, dadurch gekennzeichnet, dass sie einen ersten Subtrahierer (17) aufweist zum Vergleich des momentanen Schlupfes GF mit einem absoluten Schlupfschwellwert Sa, einen zweiten Subtrahierer (25) aufweist zur Ermittelung der Differenz zwischen dem Momentanwert des Schlupfes GF und dem mittleren Wert GM und einem dritten Subtrahierer (26) aufweist zur Ermittlung der Differenz εg zwischen dem Abstand des Schlupfes GF - GM und einem relativen Schlupfschwellwert Sr.

11. Vorrichtung zum Begrenzen des Schlupfes nach Anspruch 10, dadurch gekennzeichnet, dass sie ein Korrekturglied (20) aufweist, welches ein Korrektursignal Cg erstellt unter Durchführung einer Proportional-Integral-Differential-Verarbeitung der Differenz εg oder der Abweichung GF - Sa.

FIG.1

**FIG. 2**

## FIG.3

Mesure de Vm

Mesure de Vr

Calcul de G (U)

Filtration de G (F$_1$)

B$_2$p$^{ion}$ R

B$_2$p$^{ion}$ T

C$_1$ Fermé

Calcul de GM (F$_2$)

C$_1$ Ouvert

Calcul de Eg (D$_2$)

Calcul de GF-Sa (D$_1$)

Eg > Sr

Eg < Sr

GF > Sa

GF < Sa

(A) Consigne de position corrigée Pc=P+Cg

(A) Pas correction de position Pc= P

(A) Consigne de position corrigée Pc= P+Cg

(A) Pas correction de position Pc= P

FIG.4

(A) Position de l'attelage

(B) Effort de traction

(C) Glissement tracteur

EP 0 646 309 B1

## FIG.5

(A) Position de l'attelage

(B) Effort de traction

(C) Glissement tracteur

EP 0 646 309 B1